# EUROPEAN PATENT APPLICATION

(11) **EP 4 806 528 A1**
(43) Date of publication of application: **16.09.2026**
(21) Application number: 26163205.3
(22) Date of filing: 09.03.2026
(51) Int. Cl.: A63F 13/213, A63F 13/655, A63F 13/87

(54) **COMPUTER-IMPLEMENTED METHOD, COMPUTER PROGRAM, AND SYSTEM**

(30) Priority: 10.03.2025 JP 2025037072
(71) Applicant: Nintendo Co., Ltd., Kyoto-shi, Kyoto 601-8501 (JP)
(72) Inventor: OIWA, Ryota, Kyoto-shi, Kyoto, 601-8501 (JP); KOBAYASHI, Masayoshi, Kyoto-shi, Kyoto, 601-8501 (JP); SHIMIZU, Masahiro, Kyoto-shi, Kyoto, 601-8501 (JP); ENDO, Hiroya, Kyoto-shi, Kyoto, 601-8501 (JP); FUJITA, Akifumi, Kyoto-shi, Kyoto, 601-8501 (JP)
(74) Representative: Lorenz Seidler Gossel Part. mbB

(57) **Abstract**

A computer-implemented method includes obtaining from a running game application, designation information that indicates one or more camera image display modes among a plurality of camera image display modes different in degree of visibility of surroundings of a face of a person located within a field of view of a camera, performing selection processing based on the designation information for selecting one camera image display mode, and causing the running game application to obtain camera image data corresponding to the selected camera image display mode.

## Description

The present disclosure relates to a computer-implemented method, a computer program, and a system.

### INTRODUCTION

A camera image may be used not only in a video chat but also in a game application (for example, Japanese Patent Laying-Open No. 2016-018313).

### SUMMARY

There is room for improvement in method of using a camera image in a game application from a point of view of usability or user experiences.

(Configuration 1) According to one embodiment, a computer-implemented method includes obtaining from a running game application, designation information that indicates one or more camera image display modes among a plurality of camera image display modes different in degree of visibility of surroundings of a face of a person located within a field of view of a camera, performing selection processing based on the designation information for selecting one camera image display mode, and causing the running game application to obtain camera image data corresponding to the selected camera image display mode.

(Configuration 2) In Configuration 1, the selection processing may include presenting a selection screen for having a user select one camera image display mode from among the plurality of camera image display modes based on the designation information and selecting one camera image display mode based on a user operation.

(Configuration 3) In Configuration 2, the selection screen may provide some of the plurality of camera image display modes in a manner selectable by the user, and provide others of the plurality of camera image display modes in a manner not selectable by the user.

(Configuration 4) In Configuration 2 or 3, the selection screen may be configured to recommend the user one or more camera image display modes among the plurality of camera image display modes based on the designation information.

(Configuration 5) In any of Configurations 1 to 4, the computer-implemented method may further include causing the running game application to obtain information indicating the selected camera image display mode.

(Configuration 6) In any of Configurations 1 to 5, the selection processing may include selecting one camera image display mode based on a chat camera image display mode selected in a running chat application and the designation information.

(Configuration 7) In Configuration 6, the plurality of camera image display modes may be included in a plurality of chat camera image display modes selectable in the running chat application.

(Configuration 8) In any of Configurations 1 to 7, in the selection processing, when the designation information indicates one camera image display mode and a chat camera image display mode selected in a running chat application matches the indicated camera image display mode, the one camera image display mode indicated by the designation information may be selected without a user operation.

(Configuration 9) In Configuration 8, the selection processing may include accepting, when the designation information indicates one camera image display mode and the chat camera image display mode selected in the running chat application does not match the indicated camera image display mode, a user operation for selecting a camera image display mode.

(Configuration 10) In any of Configurations 1 to 9, one or more chat camera image display modes selectable in a running chat application may be set by a supervisor. The selection processing may include selecting, when the camera image display mode indicated by the designation information is not included in the one or more chat camera image display modes set by the supervisor, the chat camera image display mode selected in the running chat application.

(Configuration 11) In any of Configurations 1 to 10, the computer-implemented method may further include causing the running game application to obtain camera image data corresponding to a chat camera image display mode selected in a running chat application. The selection processing may include setting the chat camera image display mode in the running chat application to a mode corresponding to the camera image display mode selected in the selection processing.

(Configuration 12) A computer program for causing a computer to perform the computer-implemented method according to any of Configurations 1 to 11 may be provided.

(Configuration 13) A system configured to perform the computer-implemented method according to any of Configurations 1 to 11 may be provided.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a system according to the present embodiment.
Figs. 2A and 2B each show an exemplary illustrative non-limiting drawing illustrating an exemplary chat screen generated in a game device according to the present embodiment.
Fig. 3 shows an exemplary illustrative non-limiting drawing illustrating an exemplary hardware configuration of the game device according to the present embodiment.
Fig. 4 shows an exemplary illustrative non-limiting drawing illustrating an exemplary software configuration of the game device according to the present embodiment.
Figs. 5A to 5C each show an exemplary illustrative non-limiting drawing illustrating an exemplary camera image display mode in the game device according to the present embodiment.
Fig. 6 shows an exemplary illustrative non-limiting flowchart illustrating an exemplary processing procedure in selection processing performed in the game device according to the present embodiment.
Figs. 7A and 7B each show an exemplary illustrative non-limiting drawing illustrating an exemplary selection screen shown in step S24 in Fig. 6.
Figs. 8A and 8B each show an exemplary illustrative non-limiting drawing illustrating an exemplary game image generated in the game device according to the present embodiment.
Figs. 9A and 9B each show an exemplary illustrative non-limiting drawing illustrating another exemplary game image generated in the game device according to the present embodiment.

### DETAILED DESCRIPTION

The present embodiment will be described in detail with reference to the drawings. The same or corresponding elements in the drawings have the same reference characters allotted and description thereof will not be repeated.

Even when data is explained in identical terms, contents of the data do not have to completely match. In an example where both of one piece of data and another piece of data at least convey specific information, they may be regarded as the same data. A name of data is given for the sake of convenience, and does not limit the scope indicated by the data or the technical meaning thereof.

A program that causes a computer to perform processing may be a single program or a program group including a plurality of programs. "A program" in the present disclosure does not have to mean a single program but may include a program group. "A program" does not have to entirely be stored in a single apparatus. "A program" may mean, for example, the entirety of a plurality of programs stored in respective apparatuses included in a computer.

### [A. Exemplary System Configuration]

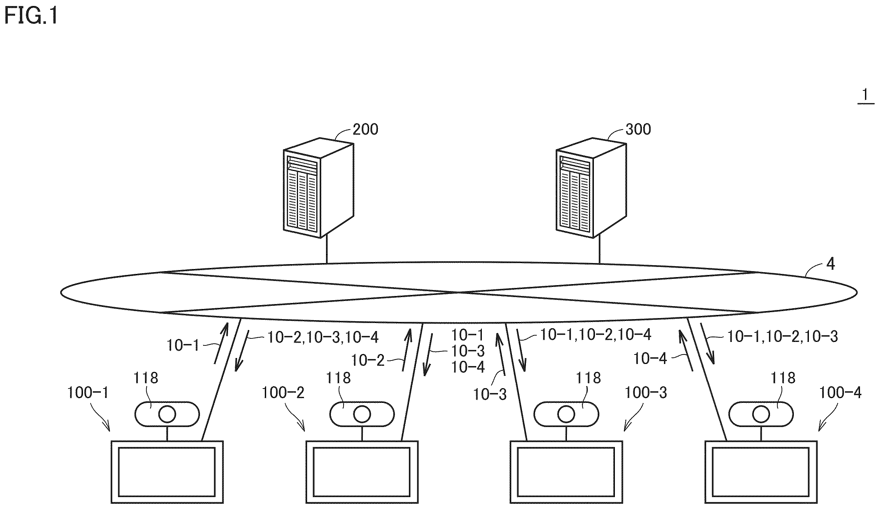

Referring to Fig. 1, a system 1 includes one or more game devices 100. Camera 118 is available in at least one of game devices 100. Fig. 1 shows an exemplary configuration of system 1 including four game devices 100 connected to a network 4. When each of a plurality of game devices 100 should be specified in the description below, a sub number will be given for distinction (for example, game devices 100-1, 100-2, 100-3, and 100-4 shown in Fig. 1).

In system 1 according to the present embodiment, a user who uses game device 100 has the user's own account and the user's own account is brought in correspondence with each game device 100. The user who has the account can cause the account brought in correspondence to join one or more chat groups (which are also abbreviated as a "group" below) by providing predetermined input to game device 100. Game device 100 corresponding to the account belonging to at least one group transmits data (which is also referred to as "communication data 10" below) to be used for communication between users to another game device 100 corresponding to another account belonging to the group. Communication between users can thus be realized in the group.

Communication data 10 may include, for example, sound data obtained by game device 100, image data obtained by game device 100, text data obtained by game device 100, information on an application running in game device 100, or the like. All pieces of data do not have to be included in one piece of communication data 10, and one piece of data may be divided into a plurality of pieces of communication data 10. One piece of communication data 10 may include a plurality of pieces of data.

"Image data" herein encompasses data of moving images and data of one or more still images. For example, image data may be data captured by camera 118 or the like or data outputted from an application executed in game device 100. A method of generating image data is not limited.

System 1 may further include a management server 200 and a relay server 300. Management server 200 is responsible for processing for newly forming a group, processing for participation of one or more accounts in a group, or the like. Relay server 300 relays communication data 10 to be transmitted or received by one or more game devices 100. Management server 200 and relay server 300 may be implemented at a single physical server.

A scheme to transmit communication data 10 from certain game device 100 to one or more other game devices 100 may be a scheme to directly transmit communication data 10 to one or more other game devices 100 (for example, P2P or the like), in addition to or instead of a scheme to transmit data through one or more relay entities (for example, relay server 300).

### [B. Exemplary Chat Screen]

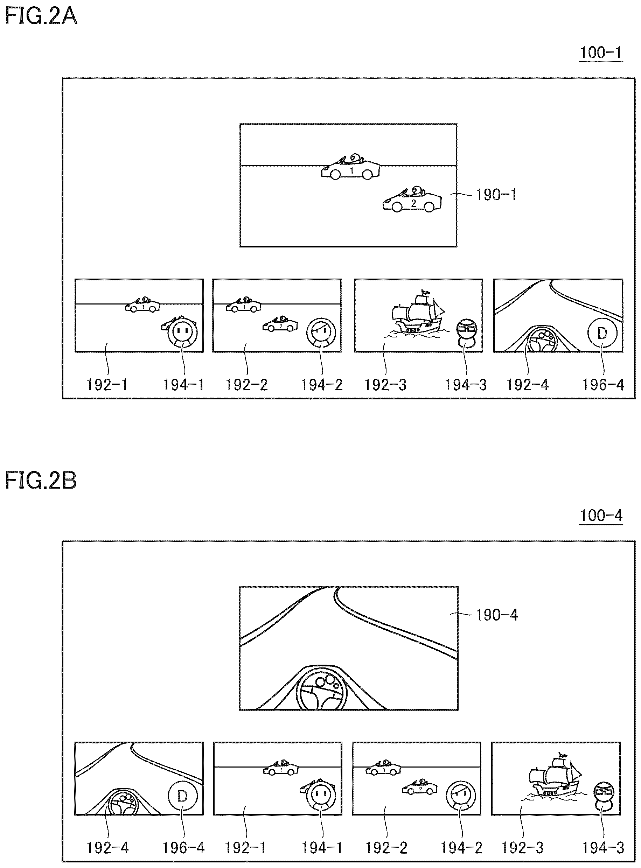

An exemplary chat screen generated in game device 100 according to the present embodiment will be described with reference to Figs. 2A and 2B.

By way of example, four accounts belong to an identical group and game devices 100-1 to 100-4 correspond to the four respective accounts as shown in Fig. 1. It is assumed in Figs. 2A and 2B that game devices 100-1 to 100-3 are streaming camera images and game device 100-4 is not streaming a camera image by way of example.

Fig. 2A shows an exemplary chat screen shown on a display 120 of game device 100-1 and Fig. 2B shows an exemplary chat screen shown on display 120 of game device 100-4. The chat screens shown in Figs. 2A and 2B are by way of example and a screen configuration of the chat screen created by using communication data 10 is not limited.

As shown in Fig. 2A, the exemplary chat screen of game device 100-1 includes a game image 190-1 of a game application running in game device 100-1. The exemplary chat screen of game device 100-1 includes streaming images 192-1 to 192-4 transmitted by respective game devices 100-1 to 100-4. In this example, game device 100-1 transmits streaming image 192-1 including game image 190-1 to other game devices 100-2 to 100-4.

As shown in Fig. 2B, the exemplary chat screen of game device 100-4 includes a game image 190-4 of a game application running in game device 100-4. The exemplary chat screen of game device 100-4 includes streaming images 192-1 to 192-4 transmitted by respective game devices 100-1 to 100-4. The order of display of the streaming images may be different from that in the exemplary chat screen of game device 100-1 shown in Fig. 2A. In this example, game device 100-4 is transmitting streaming image 192-4 including game image 190-4 to other game devices 100-1 to 100-3.

Camera images 194-1 to 194-3 distributed by game devices 100-1 to 100-3 are superimposed on streaming images 192-1 to 192-3, respectively. Since game device 100-4 is not distributing the camera image, on the other hand, an icon image 196-4 indicating the account corresponding to game device 100-4, instead of the camera image, is superimposed on streaming image 192-4.

Each of camera images 194-1 to 194-3 is an image corresponding to a camera image display mode (which is also abbreviated as a "display mode" below) set in game device 100 which is a source of streaming. Details of the display mode will be described later.

### [C. Exemplary Hardware Configuration of Game Device 100]

Game device 100 which is an exemplary information processing apparatus will now be described. The information processing apparatus is not limited to game device 100, and it may be, for example, a personal computer, a television, a tablet terminal, a smartphone, a wearable terminal, a server, or the like.

Game devices 100 corresponding to a plurality of accounts belonging to an identical group do not have to be identical in hardware configuration. For example, at least one of game devices 100 may be a device exclusive for games, and another game device 100 may be a personal computer, a television, a tablet terminal, a smartphone, a wearable terminal, a server, or the like capable of executing a game application. Game device 100 should only be a computer capable of executing at least a game application.

The "computer" herein does not necessarily mean a single apparatus but may encompass the entirety in which a plurality of apparatuses are connected by wired connection or wireless connection. In an example where the information processing apparatus is configured with a plurality of apparatuses, each of the plurality of apparatuses may be an exemplary information processing apparatus.

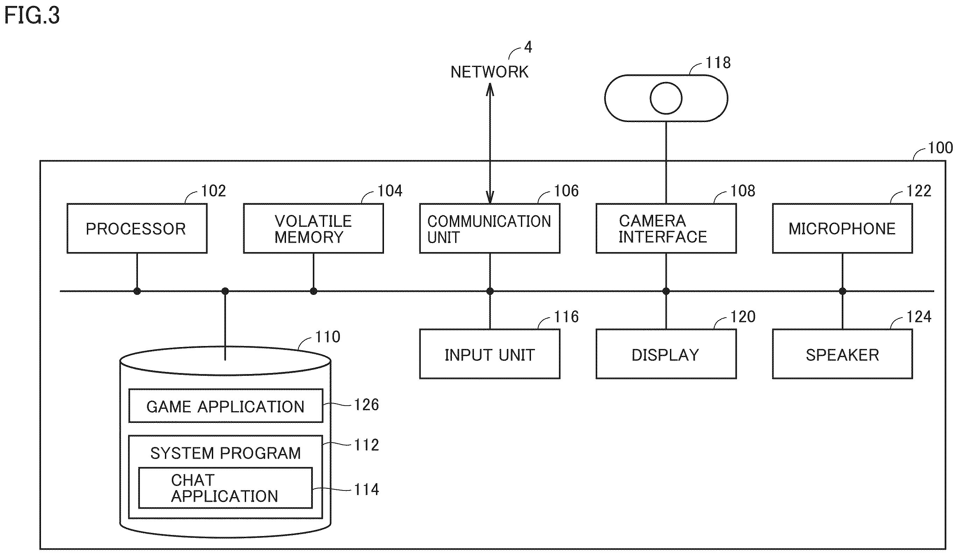

An exemplary hardware configuration of game device 100 according to the present embodiment will be described with reference to Fig. 3. Game device 100 includes, for example, one or more processors 102, one or more volatile memories 104, a communication unit 106, a camera interface 108, one or more non-volatile memories 110, an input unit 116, a display 120, a microphone 122, and a speaker 124. Each component may be removable from a main body of game device 100.

Processor 102 is a processing entity for performing processing in game device 100. Processor 102 includes, for example, a central processing unit (CPU), a graphics processing unit (GPU), or the like. Processor 102 develops a program stored in non-volatile memory 110 on volatile memory 104 and executes the same.

Volatile memory 104 is a volatile storage medium accessible by processor 102, and it includes, for example, a dynamic random access memory (DRAM), a static random access memory (SRAM), or the like.

Non-volatile memory 110 is a non-volatile storage medium accessible by processor 102, and it includes, for example, a flash memory, a hard disk, or the like. Non-volatile memory 110 may include, for example, a storage medium attachable to and removable from game device 100, such as a cartridge or an optical disc. Non-volatile memory 110 is also referred to as a storage.

For example, one or more programs such as a system program 112 and a game application 126 are stored in non-volatile memory 110.

System program 112 includes computer readable instructions for hardware control of game device 100, provision of a program execution environment, or the like. System program 112 may include one or more programs or program modules. For example, system program 112 includes a chat application 114.

Chat application 114 performs processing relating to transmission and reception of communication data 10 between a plurality of game devices 100 corresponding to a plurality of accounts belonging to a group.

Game application 126 includes computer readable instructions for execution of a game. A plurality of game applications 126 may be installed in game device 100. Game application 126 may be read from a separate storage medium. Another game device 100 or an external resource such as a server may be used for at least a part of execution of a game by game application 126. System program 112 may include at least a part of game application 126.

The "processor" herein may encompass at least processing circuitry that performs processing in accordance with computer readable instructions, such as a CPU or a GPU and hard-wired circuitry such as an application specific integrated circuit (ASIC) or a field programmable gate array (FPGA). The "memory" herein may encompass at least volatile memory 104 and non-volatile memory 110 and may include other storage media and storage devices.

In game device 100, a system on chip (SoC) in which functions of the processor, the memory, and the like are integrated may be adopted. In this case, the processor and the memory are located at the same SoC (integrated circuit). Therefore, the "processor" and the "memory" herein may at least encompass both of configurations independent of each other and an integrated configuration.

Communication unit 106 transmits and receives data to and from another game device 100, management server 200, relay server 300, or the like over network 4. Communication unit 106 may communicate data with another game device 100 or the like over the Internet as exemplary network 4. Network 4 may be a wireless network in conformity with Bluetooth^{®}, ZigBee^{®}, wireless LAN (IEEE 802.11), or the like.

Camera interface 108 mediates data transmission to camera 118 and data reception from camera 118. Connection of camera interface 108 to camera 118 may be wired connection or wireless connection.

Input unit 116 accepts a user operation. Input unit 116 includes, for example, a keyboard, a mouse, a game controller, a touch pad, and/or the like. Input unit 116 may be an interface with an apparatus (for example, a game controller) configured to accept a user operation. In other words, the apparatus configured to accept a user operation may be located outside game device 100.

Display 120 shows an image or a video image generated as a result of processing by processor 102. Display 120 includes, for example, a liquid crystal display (LCD), an organic EL display, or the like. Display 120 may be located outside game device 100. In this case, game device 100 may include an interface circuit with display 120.

Microphone 122 is arranged at a housing or the like of game device 100 and collects sound to generate a sound signal. Speaker 124 is arranged at the housing or the like of game device 100 and generates sound from a sound signal. At least one of microphone 122 and speaker 124 may be located outside game device 100.

Camera 118 generates camera data (moving image data or still image data) resulting from image capture of a subject, in accordance with a command from game device 100 or a predetermined condition. Camera 118 includes, for example, an image capture element such as a charge-coupled device (CCD) image sensor or a complementary metal oxide semiconductor (CMOS) image sensor. A lens may be arranged in a stage preceding the image capture element.

Camera 118 may be, for example, a camera for video chat. Camera 118 may be a dedicated camera connectable only to a specific device or a general-purpose camera connectable to any device. A plurality of cameras 118 may be connectable to game device 100. Furthermore, game device 100 may use a camera of another information processing apparatus (for example, a smartphone). The configuration for game device 100 to use camera 118 is thus not limited.

### [D. Exemplary Software Configuration of Game Device 100]

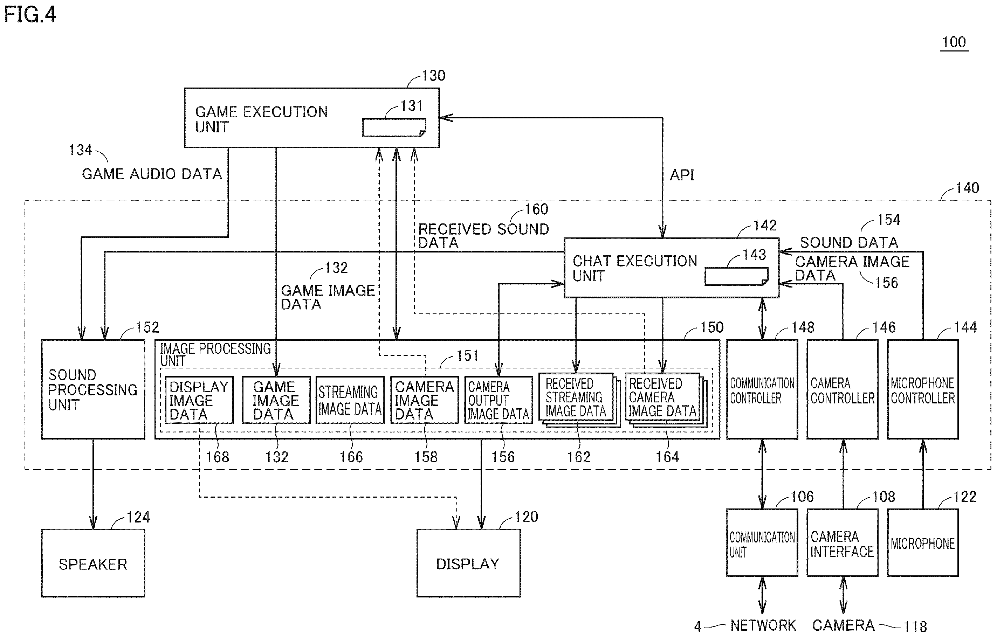

An exemplary software configuration of game device 100 according to the present embodiment will be described with reference to Fig. 4. In game device 100, system program 112 including chat application 114 and game application 126 are simultaneously executable. "Being simultaneously executable" means that a plurality of applications or programs are executed in parallel and does not limit execution timing or the like.

Game device 100 includes a system module 140 and a game execution unit 130 by way of example of a software component. System module 140 may be implemented by execution of system program 112 by one or more processors 102. System module 140 can also be referred to as running system program 112. Game execution unit 130 may be implemented by execution of game application 126 by one or more processors 102. Game execution unit 130 can also be referred to as running game application 126.

Game execution unit 130 proceeds with a game based on a user operation and outputs game image data 132 and game audio data 134. Game image data 132 may include, for example, a plurality of types of image data different in image quality, resolution, or frame rate. Game execution unit 130 may include designation information 131 that indicates one or more display modes. The one or more display modes indicated by designation information 131 may be based on one or more display modes selectable in the chat screens shown in Figs. 2A and 2B or may be independent of each other.

System module 140 provides a basic function necessary in game device 100. System module 140 includes, for example, a chat execution unit 142. Chat execution unit 142 can also be referred to as running chat application 114. Chat execution unit 142 may include display mode information 143 indicating a current display mode of showing camera image data 158. Camera image data 158 corresponding to the display mode indicated by display mode information 143 is generated.

System program 112 does not have to include at least a part of chat application 114. At least a part of chat application 114 may be an application different from system program 112, similarly to game application 126. In the description below, a part or the entirety of processing performed by system module 140 may be performed by chat execution unit 142. Therefore, in a context of processing performed by system module 140, system module 140 can also be read as chat execution unit 142 and system module 140 can also be read as system module 140 and chat execution unit 142.

System module 140 includes, for example, a microphone controller 144, a camera controller 146, a communication controller 148, an image processing unit 150, and a sound processing unit 152.

Microphone controller 144 generates sound data 154 based on sound collected by microphone 122 or the like.

Camera controller 146 generates camera output image data 156 based on an image captured by camera 118 or the like. Camera controller 146 may be able to control start and stop or the like of image capture by camera 118, or to control a condition (a frame rate, white balance, or the like) for image capture by camera 118.

Communication controller 148 gives a command to communication unit 106 to control data communication with another game device 100 or the like.

Image processing unit 150 can use a storage area 151 for storage of image data. Storage area 151 may use, for example, a partial area of one or more volatile memories 104 or one or more non-volatile memories 110. Image processing unit 150 may be able to perform image processing on one or more pieces of image data.

Storage area 151 may include, for example, an area for storing game image data 132, camera output image data 156, camera image data 158, one or more pieces of received streaming image data 162, one or more pieces of received camera image data 164, streaming image data 166, and display image data 168.

Camera image data 158 is generated from camera output image data 156 in accordance with the display mode. Rather than generation of camera image data 158 from camera output image data 156, camera 118 or camera controller 146 may generate camera image data 158 in accordance with the display mode.

Chat execution unit 142 performs processing for communication between users in the group. For example, chat execution unit 142 may perform processing for joining or leaving the indicated group in accordance with a user operation.

Chat execution unit 142 may generate and transmit communication data 10 based on at least one of sound data 154, streaming image data 166, and camera image data 158 as processing for streaming. Streaming image data 166 includes an image to be distributed to another game device 100.

Chat execution unit 142 may cause received streaming image data 162, received camera image data 164, and the like included in one or more pieces of communication data 10 from one or more other game devices 100 to be stored in storage area 151, as processing for receiving streaming data. Chat execution unit 142 may output to sound processing unit 152, received sound data 160 included in one or more pieces of communication data 10 from one or more other game devices 100, as processing for receiving streaming data. Sound processing unit 152 may generate a sound signal based on sound data and output the generated sound signal to speaker 124.

Image processing unit 150 may generate display image data 168 by using at least one of game image data 132, camera image data 158, one or more pieces of received streaming image data 162, and one or more pieces of received camera image data 164 in accordance with a command from chat execution unit 142. Display image data 168 is used for showing an image or a video image on display 120 of the device to which it belongs.

### [E. Camera Image Display Mode]

In game device 100 according to the present embodiment, a plurality of display modes may be prepared in running chat application 114. The user can set or change the display mode, for example, on a setting screen of running chat application 114. The plurality of display modes may be different, for example, in degree of visibility of surroundings of a face of a person located within a field of view of camera 118. The surroundings of the face may include a part (for example, a body or the like) under the face. The degree of visibility may include, for example, whether to show an image, a degree of blur, or the like.

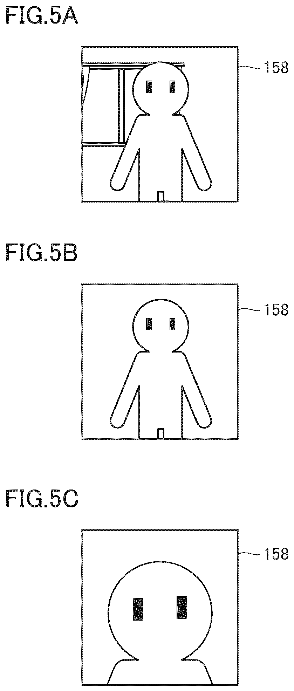

An exemplary camera image display mode in game device 100 according to the present embodiment will be described with reference to Figs. 5A to 5C. Figs. 5A to 5C exemplify three display modes by way of example.

Fig. 5A shows an exemplary image of camera image data 158 in an example where a full-view mode is selected, by way of example of the display mode. The exemplary image shown in Fig. 5A is substantially identical to the image (for example, camera output image data 156) captured by camera 118. It can also be said that a full view of the image captured by camera 118 is used as it is. In the full-view mode, the surroundings of the face of the person in the image captured by camera 118 is fully shown.

Fig. 5B shows an exemplary image of camera image data 158 in an example where a cut-out mode is selected, by way of example of the display mode. The exemplary image shown in Fig. 5B is such an image that only a person located within the field of view of camera 118 is cut out. In the cut-out mode, a background around the person in the image captured by camera 118 may be set to a specific color (for example, white) or a transparent color. In the cut-out mode, it can also be said that the background in the surroundings of the face of the person is not shown. The image in the cut-out mode may include the face of the person and at least a part of the upper body (for example, a range above the navel). Though one person is cut out in the exemplary image shown in Fig. 5B, in an example where a plurality of persons are located within the field of view of camera 118, the plurality of persons may be cut out.

Fig. 5C shows an exemplary image of camera image data 158 in an example where a face mode is selected, by way of example of the display mode. The exemplary image shown in Fig. 5C is extraction of the face and the surroundings of the face of the person located within the field of view of camera 118. In the face mode, the face and the surroundings of the face of the person in the image captured by camera 118 may be extracted. The image captured by camera 118 may be enlarged as necessary. In the face mode, it can also be said that things other than the face of the person are not shown. The image in the face mode can also be paraphrased as including only the face.

In the face mode, the background around the face of the person may be shown as it is or as being blurred away. Alternatively, the background around the face of the person may be set to a specific color (for example, white) or a transparent color. At this time, cut-out processing may be performed along the contour of the face of the person.

In the chat screens shown in Figs. 2A and 2B described above, the users of game devices 100-1 and 100-2 have selected the face mode and the user of game device 100-3 has selected the cut-out mode.

Though three display modes are exemplified by way of example, the number of display modes is not limited and the display mode to be adopted is not limited either. For example, the display mode may include a mode in which the background in a full-view range is shown as being blurred away. In a modification, in each mode described above, rather than cutting out a quadrangular area, a circular or oval area may be cut out. Image data may include a frame of the cut-out area.

System module 140 may select the display mode based on a user operation. Camera output image data 158 corresponding to the display mode may be generated by at least one of camera controller 146, chat execution unit 142, and image processing unit 150 (see Fig. 4) or by a feature other than that.

### [F. Processing for Selecting Camera Image Display Mode]

In an example where system program 112 including chat application 114 and game application 126 are simultaneously running, game application 126 may use camera output image data 156. For example, game execution unit 130 may access storage area 151 of image processing unit 150 to obtain camera output image data 156 and generate a game image by using obtained camera output image data 156.

In an example where a plurality of display modes are selectable by the user, recommended values of the display modes may be set in game application 126. The recommended values indicate one or more display modes recommended in game application 126. In game application 126, selection by the user, of a display mode other than the recommended values may be allowed. Designation information 131 (see Fig. 4) in game execution unit 130 may indicate the recommended value.

In the example where the plurality of display modes are selectable, allowable values of the display modes may be set in game application 126. The allowable values indicate one or more display modes selection of which is allowed in game application 126. Designation information 131 (see Fig. 4) may indicate the allowable value.

For example, a developer of game application 126 may set in advance, one or more display modes suitable for execution of game application 126 as recommended values, or may set in advance one or more display modes allowed in execution of game application 126 as allowable values. In game application 126, only at least one of the recommended value or the allowable value may be set, or neither of them may be set.

The display mode selected by the user for a chat while chat application 114 and game application 126 are simultaneously running may not match with the recommended values or the allowable values set in game application 126. By way of example, in an example where game application 126 to be executed provides a game to be played by a plurality of users, a game image generated by game application 126 may desirably include images of a plurality of users. At this time, the recommended value or the allowable value set in game application 126 may be the cut-out mode or the full-view mode. In running chat application 114, on the other hand, the face mode in which only the face of a single user is basically shown may be selected.

Therefore, system module 140 may perform selection processing as below to select one display mode. As the selection processing is performed, the display mode of showing camera image data 158 used by chat application 114 is changed. In other words, the display mode in running chat application 114 is set to the mode corresponding to the display mode selected in the selection processing. System module 140 causes game execution unit 130 to obtain camera image data 158 corresponding to the display mode selected in the selection processing.

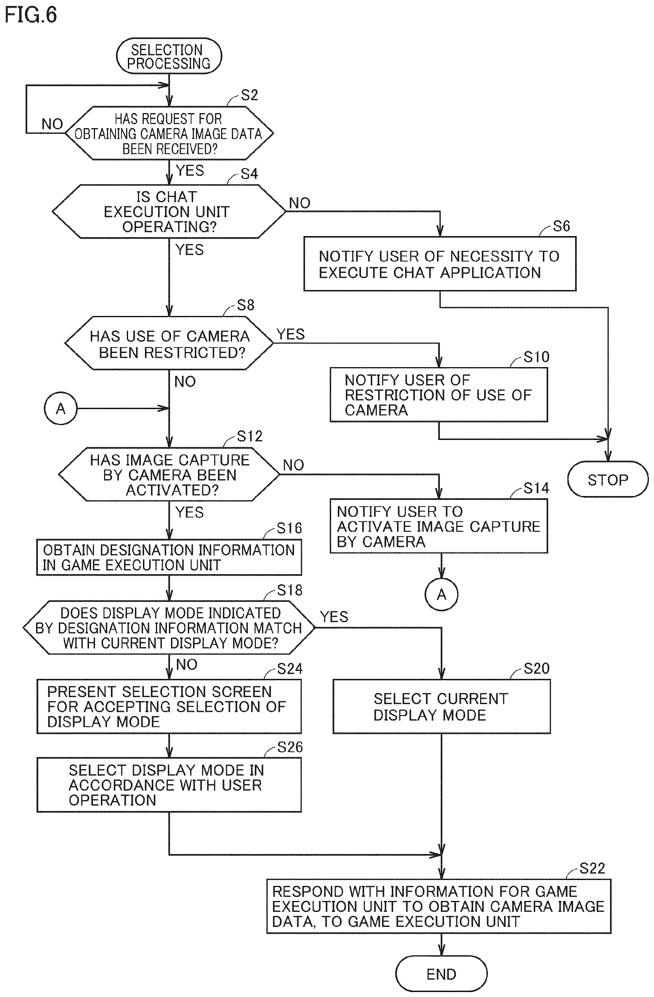

An exemplary processing procedure in the selection processing performed in game device 100 according to the present embodiment will be described with reference to Fig. 6. Each step shown in Fig. 6 may be performed by execution of system program 112 by one or more processors 102.

Processing described in the present embodiment may include other types of processing or does not have to include a part of processing. The order of performing processing is by way of example. For example, a plurality of types of processing may be performed in parallel, or some processing may be performed in the order reverse to the order in the description. Though processing is divided in units of steps for the sake of convenience of description, any unit of division may be applicable. A plurality of steps may be integrated, or a single step may be divided into a plurality of steps. This is also similar in the description which will follow.

When system module 140 receives a request for obtaining camera image data 158 from game execution unit 130 (step S2), it determines whether or not chat execution unit 142 is operating (step S4). Chat execution unit 142 being operating may refer, for example, to a state in which chat application 114 has been started up, a state in which an account brought in correspondence with game device 100 belongs to at least one group, or a state in which a plurality of accounts including the account brought in correspondence with game device 100 belong to at least one group.

When chat execution unit 142 is not operating (NO in step S4), system module 140 notifies the user of necessity to execute chat application 114 (step S6). The process is then stopped. When the process is stopped, game execution unit 130 may proceed with the game without using camera image data 158, or may stop proceeding with the game (this is also the case when the process below is stopped).

When chat execution unit 142 is operating (YES in step S4), system module 140 determines whether or not use of camera 118 is restricted (step S8). Use of camera 118 may be restricted, for example, in system setting or in setting of chat application 114. Use of camera 118 by a certain account may be restricted by another account that supervises the certain account.

When use of camera 118 is restricted (YES in step S8), system module 140 notifies the user of restriction of use of camera 118 (step S10). The process is then stopped.

When use of camera 118 is not restricted (NO in step S8), system module 140 determines whether or not image capture by camera 118 has been activated (step S12). When image capture by camera 118 has not been activated (NO in step S12), system module 140 notifies the user to activate image capture by camera 118 (step S14). Processing in step S12 or later is then repeated. When image capture by camera 118 is not activated after lapse of a predetermined time period after step S14, the process may be stopped.

When image capture by camera 118 has been activated (YES in step S12), system module 140 obtains designation information 131 in game execution unit 130 (step S16), and determines whether or not the display mode indicated by obtained designation information 131 and a current display mode (for example, the display mode indicated by display mode information 143) match with each other (step S18).

For example, in an example where designation information 131 indicates one display mode as the recommended value, when the recommended value and the current display mode match with each other, determination as matching may be made. In an example where designation information 131 indicates a plurality of display modes as recommended values, when the current display mode matches with at least one recommended value, determination as matching may be made. For example, in an example where designation information 131 indicates one or more display modes as the allowable values, when the current display mode is included in the allowable values, determination as matching may be made. In an example where designation information 131 includes the recommended value and the allowable value, when the current display mode does not match with the recommended value but is included in the allowable value, determination as matching or determination as not matching may be made. Processing for determining matching is not limited as above.

When the display mode indicated by obtained designation information 131 matches with the current display mode (YES in step S18), system module 140 selects the current display mode (step S20). "To select" in this case may mean simply maintaining the state. When the current display mode is maintained, change to the selected display mode does not have to newly be made, although one display mode is selected.

When designation information 131 indicates one display mode as the recommended value and the display mode selected in chat execution unit 142 matches the indicated display mode, system module 140 may thus select the one display mode indicated by designation information 131 without the user operation. In other words, system module 140 may select one display mode based on the display mode selected at chat execution unit 142 and designation information 131.

System module 140 then responds to game execution unit 130, with information for game execution unit 130 to obtain camera image data 158 corresponding to the display mode (step S22). For example, the information for obtaining camera image data 158 may include identification information for specifying camera image data 158 stored in storage area 151. Game execution unit 130 obtains camera image data 158 based on the information from system module 140.

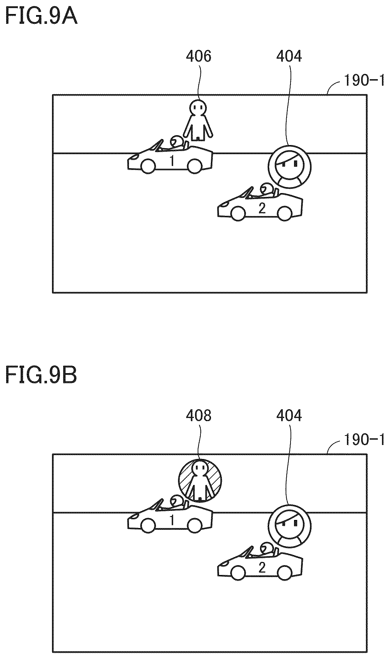

System module 140 may respond with the selected display mode to game execution unit 130. In other words, system module 140 may cause game execution unit 130 to obtain information indicating the selected display mode. Game execution unit 130 may perform processing (for example, processing shown in Figs. 9A and 9B which will be described later) in accordance with the selected display mode.

When the display mode indicated by obtained designation information 131 does not match with the current display mode (NO in step S18), system module 140 may accept selection of the display mode based on obtained designation information 131.

By way of example, system module 140 may have a selection screen for accepting selection of the display mode shown based on the recommended value or the allowable value included in designation information 131 (step S24). System module 140 may have the selection screen shown even in the absence of designation information 131. System module 140 then selects the display mode in accordance with the user operation (step S26) and performs processing in step S22.

When designation information 131 indicates one display mode and the display mode selected at chat execution unit 142 does not match the indicated display mode, system module 140 may thus accept the user operation for selecting the one display mode.

Though Fig. 6 shows the example where system module 140 performs all processing, at least a part of the processing may be performed, for example, by game execution unit 130. For example, in step S4, game execution unit 130 may obtain from system module 140, information on whether or not chat execution unit 142 is operating. For example, based on that information, game execution unit 130 may then obtain from system module 140, information as to whether or not use of camera 118 is restricted, or may request system module 140 to notify the user of necessity to execute chat application 114. As described above, the processing may be performed as a series of processing or individually.

The display mode selected based on designation information 131 or the like in game execution unit 130 is reflected in chat execution unit 142 (or system module 140). In other words, selection of the display mode at game execution unit 130 is in coordination with selection of the display mode at chat execution unit 142 (or system module 140). It can also be said that the display mode at chat execution unit 142 is changed based on the request from game execution unit 130.

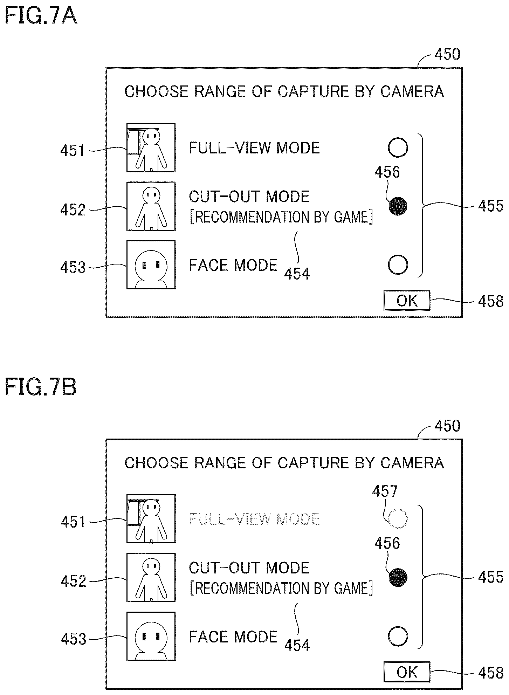

An exemplary selection screen shown in step S24 in Fig. 6 will be described with reference to Figs. 7A and 7B. The selection screen is a screen for having the user select one display mode from among the plurality of display modes. The exemplary selection screen shown in Figs. 7A and 7B may be the same as or different from the selection screen shown when the display mode is set or changed in chat application 114. In a selection screen 450 shown in Fig. 7A, by way of example, three display modes (for example, a full-view mode 451, a cut-out mode 452, and a face mode 453) selectable in chat application 114 are selectable. The number of display modes shown in the selection screen is not limited.

In Fig. 7A, the recommended values are set in game application 126. In the display mode indicated by the set recommended value (cut-out mode 452 in this example), an object 454 (for example, text "recommendation by game") indicating that the display mode is the recommended value may be shown. A radio button 455 corresponding to the recommended value set in game application 126 may be selected as an initial value (initial value 456). In an example where the plurality of display modes are indicated as the recommended values, in selection screen 450, a plurality of objects 454 may be shown in correspondence with respective display modes. At this time, the initial value of the radio button may be determined in accordance with a predetermined rule or predetermined priority among the plurality of display modes indicated as the recommended values. Selection screen 450 may thus recommend the user one or more display modes among the plurality of display modes based on designation information 131.

Guidance processing for facilitating selection by the user, of the display mode indicated as the recommended value may include, for example, at least one of display of object 454 indicating that the display mode is the recommended value or initial value 456 of radio button 455. By showing object 454 indicating that the display mode is the recommended value, initial value 456 of the radio button, or the like, usability for selection of the display mode can be improved.

In Fig. 7B, the recommended value and the allowable value are set in game application 126. It is assumed, for example, that cut-out mode 452 and face mode 453 are indicated as the allowable values. In selection screen 450 shown in Fig. 7B, a radio button 457 may be shown such that full-view mode 451 not included in the allowable values is not selectable. In other words, selection screen 450 shown in Fig. 7B includes also the display mode not selectable by the user. As selection screen 450 includes the display mode that is not selectable, the user can intuitively know the display mode that is not selectable.

For example, as the user selects radio button 455 corresponding to the desired display mode and presses an OK button 458, system module 140 accepts the display mode selected by the user. System module 140 selects one display mode based on the user operation. An interface for selection of the display mode is not limited to radio button 455, and it may be, for example, a pull-down list.

Though the display mode not included in the allowable value is presented in a non-selectable state in selection screen 450 shown in Fig. 7B, display thereof per se does not have to be provided. In another modification, for the display mode not included in the allowable values, text or the like indicating that the display mode is not included in the allowable values may be shown.

A manner of display for informing the user of the recommended value or the allowable value is not limited. For example, the display mode indicated as the recommended value may be highlighted by using a color, a font, or the like different from that in another display mode.

In a modification, processing in step S18 in Fig. 6 may be omitted, and regardless of whether or not the display mode indicated by designation information 131 matches with the current display mode, selection of the display mode may be accepted by using the selection screen or the like.

In a modification, when the display mode indicated by designation information 131 matches with the current display mode (YES in step S18 in Fig. 6), the user may be notified of the fact of matching. System module 140 may seek for approval by the user as to use of camera image data 158 corresponding to the current display mode in a game. When the user desires change of the display mode, system module 140 may accept the desire.

For example, when the display mode indicated by the recommended value in designation information 131 does not match with the display mode selected at chat execution unit 142, system module 140 may select the display mode selected at chat execution unit 142 as the initial value of the radio button.

Instead of step S18 and processing thereafter in Fig. 6, system module 140 may forcibly change the display mode to the display mode indicated by designation information 131. At this time, a notification about forced change of the display mode may be or may not be given to seek for approval by the user. In an example where the notification is given, system module 140 may change the display mode when it obtains approval by the user and may stop the process when it does not obtain approval by the user.

From a point of view of privacy, protection of minors, or the like, chat application 114 may be permitted to restrict use of camera 118 in accordance with setting by a supervisor or the like. In such a restricted state, for example, permission by the supervisor, entry of a password, or the like may be required for use of camera 118.

For example, when use of camera 118 is restricted in the process in Fig. 6 (YES in step S8), the user may be notified of restriction of use of camera 118 (step S10) and then permission by the supervisor, entry of the password, or the like may be accepted.

In addition to or instead of use of camera 118, the supervisor or the like may be allowed to set one or more display modes to be selectable (for example, a white list) or to set one or more display modes to be not selectable (for example, a black list). In this case, the user is not permitted to select the display mode set to be not selectable. Therefore, when the display mode indicated by designation information 131 is not included in the one or more selectable display modes set by the supervisor or the like, system module 140 may select the display mode selected at chat execution unit 142 without the user operation.

Alternatively, in an example where the selection screen for accepting the user operation is shown, the restricted display mode does not have to be shown or the restricted display mode may be shown as the display mode that is not selectable.

In an example where a specific display mode is restricted, for example, before or after step S24 in Fig. 6 is performed, the user may be notified of restriction of the specific display mode. In addition, system module 140 may accept permission by the supervisor or entry of the password such that use of the restricted display mode is permitted.

Interaction (for example, a request and a response or the like) between system module 140 and game execution unit 130 may be in accordance with any instruction system. By way of example, the application programming interface (API) may be used. For example, game execution unit 130 may request system module 140 to obtain camera image data 158 in accordance with the instruction system defined in advance as the API. In addition, system module 140 may respond with information for obtaining camera image data 158 to game execution unit 130 in accordance with the instruction system defined in advance as the API.

Though one implementation where system module 140 responds with information for obtaining camera image data 158 to game execution unit 130 (for example, step S22 in Fig. 6) in the selection processing described above is shown, the method for game execution unit 130 to obtain camera image data 158 is not limited as such. For example, system module 140 may respond with camera image data 158 itself to game execution unit 130.

In another modification, separately from the display mode of system module 140, a display mode for camera image data that game execution unit 130 is caused to obtain may be set. At least one of camera 118, camera controller 146, or image processing unit 150 may generate camera image data for game execution unit 130 in accordance with the display mode for game execution unit 130. Game execution unit 130 may give designation of the display mode to camera 118 or camera controller 146 and may obtain the camera image data corresponding to the display mode from camera 118 or camera controller 146 or from system module 140.

Game application 126 may use the camera image including the face of the user (for example, game processing using the camera image as will be described later). At this time, from a point of view of usability or user experiences, there is an appropriate range of image capture in accordance with game application 126. In such a case, by selecting the display mode based on designation information 131 in system module 140 and causing game application 126 to obtain the camera image corresponding to the selected display mode, processing at a side of game application 126 or man-hours in development can be reduced.

For example, in an example where use of camera 118 or the display mode in chat application 114 can be restricted in system module 140, game execution unit 130 can use camera image data 158 after such determination.

In the embodiment above, when game application 126 uses the camera image including the face of the user, the display mode of showing the camera image in chat application 114 is changed or selection screen 450 for the change is shown. Therefore, the user who is executing or attempts to execute game application 126 does not have to perform such an operation as setting chat application 114 as an object to be operated and opening a setting screen for changing the display mode in chat application 114, and usability is excellent. The user may be permitted to change the display mode of showing the camera image in chat application 114, with chat application 114 being set as the object to be operated, while the user is executing game application 126 where the camera image including the face of the user is used. At this time, in response to the change, the camera image shown in the game image of game application 126 is also changed.

### [G. Exemplary Game Image Using Camera Image Data 158]

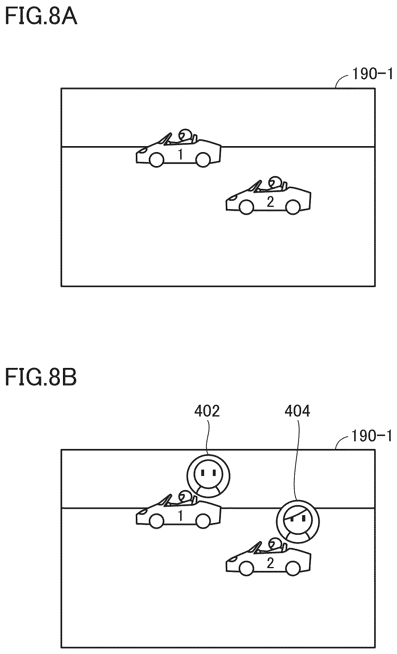

An exemplary game image generated in game device 100 according to the present embodiment will be described with reference to Figs. 8A, 8B, 9A, and 9B. Figs. 8A, 8B, 9A, and 9B show exemplary game images in an example where accounts brought in correspondence at least with game device 100-1 and game device 100-2, respectively, belong to an identical group. For example, the user having the account brought in correspondence with game device 100-1 and the user having the account brought in correspondence with game device 100-2 are assumed as being simultaneously playing an identical game application. The game application may be a communication game.

Referring to Fig. 8A, for example, on display 120 of game device 100-1, game image 190-1 including a game object (labeled, for example, with "1") operated by the user of game device 100-1 and a game object (labeled, for example, with "2") operated by the user of game device 100-2 is shown.

In the state above, game execution unit 130 of game device 100-1 can also use camera image data 158 to generate game image 190-1. Game device 100-1 can also use received camera image data 164 received from game device 100-2.

Referring to Fig. 8B, for example, a camera image 402 may be superimposed at a position proximate to the game object operated by the user of game device 100-1 and a camera image 404 may be superimposed at a position proximate to the game object operated by the user of game device 100-2. Camera image 402 may be based on camera image data 158 and camera image 404 may be based on received camera image data 164 from game device 100-2.

Fig. 8B shows exemplary game image 190-1 using camera image data 158 in the example where the face mode is selected as the display mode.

In game application 126, even when the face mode is indicated as the recommended value of the display mode, the user may select a display mode other than the recommended value. Fig. 9A shows exemplary game image 190-1 using camera image data 158 in an example where the cut-out mode is selected as the display mode. Specifically, in game image 190-1 shown in Fig. 9A, a camera image 406 based on camera image data 158 in accordance with the cut-out mode is superimposed at a position proximate to the game object operated by the user of game device 100-1.

When game execution unit 130 obtains the selected display mode from system module 140, it may generate the camera image to be superimposed in accordance with the obtained display mode. For example, as shown in Fig. 9B, game execution unit 130 may set any background in an area other than the person included in camera image data 158, based on information indicating that the cut-out mode has been indicated. For example, any background may be colored in accordance with the background of the game that is being executed. In addition, game execution unit 130 may superimpose a (for example, circular or quadrangular) frame around obtained camera image data 158. For example, game execution unit 130 may obtain the camera image in the cut-out mode and generate an image like camera image 404 in the face mode from that image.

Game execution unit 130 may thus make image processing or display processing on obtained camera image data 158 different in accordance with the obtained display mode. In other words, game execution unit 130 may perform the image processing or the display processing in accordance with the obtained display mode. Even when at least the recommended value is not set in game application 126, processing shown in Figs. 9A and 9B can be performed.

Though Figs. 8A, 8B, 9A, and 9B show the game images on which game image data 132 is superimposed by way of example, exemplary use of game image data 132 in game application 126 is not limited as such and the game image data can be used in any method (for example, a game in which collision detection is performed within the area where the person is shown, face recognition, or the like).

### [H. Other Modifications]

The one or more display modes selectable at chat execution unit 142 do not have to completely match with the one or more display modes selectable at game execution unit 130 or the former may at least partially match with the latter. For example, three display modes may be selectable at chat execution unit 142 and other three display modes may be selectable at game execution unit 130. Alternatively, for example, four display modes may be selectable at chat execution unit 142 and three of the four display modes may be selectable at game execution unit 130. Selectable display modes at game execution unit 130 may thus be included in the display modes selectable at chat execution unit 142.

In a modification, system module 140 may include selection of the display mode as system setting, independently of the display mode at chat execution unit 142. In this case, system module 140 may select one display mode based on the display mode included in the system setting and designation information 131.

In another modification, in an example where chat execution unit 142 includes selection of the display mode and system module 140 also includes selection of the display mode as system setting, when game execution unit 130 refers to the system setting, system module 140 may select one display mode based on the display mode included in the system setting and designation information 131.

### [I. Other Embodiments]

Though an example where camera image data 158 used in running chat application 114 is used also in a running game application is shown in the description above, camera image data 158 may be used in one or more other applications, without being limited to the game application.

Though an example in which a plurality of users are executing the communication game is described for the sake of convenience of description, the present disclosure is applicable also off-line and applicable to an example where a single user is playing a game.

Processing for selecting the display mode may be performed in the game application. In this case, the game application may provide the screen for selecting the display mode and accept selection by the user.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A computer-implemented method comprising:
obtaining (S16) from a running game application (126), designation information (131) that indicates one or more camera image display modes among a plurality of camera image display modes (451, 452, 453) different in degree of visibility of surroundings of a face of a person located within a field of view of a camera;
performing (S20) selection processing based on the designation information for selecting one camera image display mode; and
causing (S22) the running game application to obtain camera image data (158) corresponding to the selected camera image display mode.

2. The computer-implemented method according to claim 1, wherein
the selection processing comprises:
presenting (S24) a selection screen for having a user select one camera image display mode from among the plurality of camera image display modes, based on the designation information; and
selecting (S26) one camera image display mode based on a user operation.

3. The computer-implemented method according to claim 2, wherein
the selection screen provides some of the plurality of camera image display modes in a manner selectable by the user, and provides others of the plurality of camera image display modes in a manner not selectable by the user.

4. The computer-implemented method according to claim 2 or 3, wherein
the selection screen is configured to recommend the user one or more camera image display modes among the plurality of camera image display modes based on the designation information.

5. The computer-implemented method according to any of claims 1 to 4, further comprising causing the running game application to obtain information indicating the selected camera image display mode.

6. The computer-implemented method according to any of claims 1 to 5, wherein
the selection processing comprises selecting (S18) one camera image display mode based on a chat camera image display mode selected in a running chat application and the designation information.

7. The computer-implemented method according to claim 6, wherein
the plurality of camera image display modes are included in a plurality of chat camera image display modes selectable in the running chat application.

8. The computer-implemented method according to any of claims 1 to 7, wherein
in the selection processing, when the designation information indicates one camera image display mode and a chat camera image display mode selected in a running chat application matches the indicated camera image display mode, the one camera image display mode indicated by the designation information is selected without a user operation.

9. The computer-implemented method according to claim 8, wherein
the selection processing comprises accepting, when the designation information indicates one camera image display mode and the chat camera image display mode selected in the running chat application does not match the indicated camera image display mode, a user operation for selecting a camera image display mode.

10. The computer-implemented method according to any of claims 6 to 9, wherein
one or more chat camera image display modes selectable in the running chat application are set by a supervisor, and
in the selection processing, when the camera image display mode indicated by the designation information is not included in the one or more chat camera image display modes set by the supervisor, the chat camera image display mode selected in the running chat application is selected.

11. The computer-implemented method according to any of claims 1 to 10, further comprising causing the running game application to obtain camera image data corresponding to a chat camera image display mode selected in a running chat application, wherein
the selection processing comprises setting the chat camera image display mode in the running chat application to a mode corresponding to the camera image display mode selected in the selection processing.

12. A computer program (112, 114) causing a computer to perform the computer-implemented method according to any of claims 1 to 11.

13. A system configured to perform the computer-implemented method according to any of claims 1 to 11.
